# EUROPÄISCHE PATENTANMELDUNG

(11) **EP 0 562 378 A1**
(43) Veröffentlichungstag der Anmeldung: **29.09.1993**
(21) Anmeldenummer: 93103913.5
(22) Anmeldetag: 11.03.1993
(51) Int. Cl.: C08J 5/18, C08L 1/02

(54) **Verfahren zur Herstellung von dünnen Polyglukanregeneratfilmen**

(30) Priorität: 25.03.1992 DE 4209617
(71) Anmelder: BASF Aktiengesellschaft, D-67063 Ludwigshafen (DE)
(72) Erfinder: Wegner, Gerhard, Prof. Dr., W-6500 Mainz (DE); Wenz, Gerhard, Dr., W-6500 Mainz (DE); Schaub, Matthias, W-6500 Mainz (DE); Stein, Armin, Dr., W-6908 Jena (DE); Klemm, Dieter, Prof. Dr., W-5300 Weimar (DE)

(57) **Zusammenfassung**

Die Erfindung betrifft ein Verfahren zur Herstellung von dünnen Polyglukanregeneratfilmen durch Umsetzung von Polyglukan (bevorzugt Cellulose) mit einem Silylierungsmittel, Filmbildung und Entsilylierung,
wobei die Filmbildung nach dem Langmuir-Blodgett-Verfahren oder durch Spin-Coating und die Entsilylierung durch gasförmige Mineralsäure oder gasförmige organische Säure erfolgt.

Die erfindungsgemäß hergestellten Polyglukanregeneratfilme eignen sich beispielsweise als Membranen.

## Beschreibung

Die Erfindung betrifft ein Verfahren zur Herstellung von dünnen Polyglukanregeneratfilmen durch Umsetzung mit einem Silylierungsmittel, Filmbildung und Entsilylierung.

Silylderivate der Cellulose sowie Verfahren zur Herstellung von Fasern und Folien aus regenerierter Cellulose sind sowohl aus der Publikation von G. Greber und O. Paschinger in "das Papier", 35. Jahrgang, Heft 12 (1981) Seiten 547 bis 554 als auch aus der DE-A 31 04 529 bekannt. Hierbei wird Cellulose mit Trimethylchlorsilan silyliert und deren Lösungen in organischen Lösungsmitteln in geformte Erzeugnisse überführt. Gleichzeitig oder in einem nachfolgenden Arbeitsschritt werden diese Erzeugnisse in Gegenwart von mindestens stöchiometrischen Mengen Wasser, vorzugsweise in saurem Medium quantitativ entsilyliert. Hier wird auch ein Verfahren zur Herstellung von Fasern erwähnt, wobei die Lösung der o-Trimethylsilyl-Cellulosen entweder nach dem Trockenspinnverfahren durch Abdampfen des Lösungsmittels und Entsilylierung mit einem sauren Reagenz in geformte Fasern übergeführt wird oder die Lösung nach dem Naßspinnverfahren in ein Fällbad versponnen wird. Beim Trockenspinnprozeß wird die Desilylierung entweder bereits beim Verspinnen durch sauren Wasserdampf oder nachträglich in einem sauren Wasserbad bei verschiedenen Temperaturen und Verstreckungsgraden durchgeführt.

In Makromol. Chem. 191, 2985-2991 (1990) werden von D. Klemm, M. Schnabelrauch und A. Stein photoreaktive Cellulosederivate mit kammartiger Struktur beschrieben. Hierbei wird o-Trialkylsilylcellulose durch Veresterung mit Zimtsäure modifiziert.

Langmuir-Blodgett-Einfach- und Mehrfachschichten von amphiphilen Celluloseestern mit Acylgruppen unterschiedlicher Kettenlänge und unterschiedlichen Substitutionsgrades, wie Cellulosetrioctanoat, -tridecanoat, -trilaurat, -dilaurat, und -tripalmitat sind aus Journal of Colloid and Interface Science, Vol 104, No. 1, März 1985, 290-293 bekannt.

In Thin Solid Films, 133 (1985) 29-38 werden schließlich von T. Kawaguchi, H. Nakahara und K. Fukuda monomolekulare und multimolekulare Filme von Celluloseestern mit unterschiedlichen Alkylketten untersucht.

Aufgabe der vorliegenden Erfindung ist es ein Verfahren zur Herstellung von dünnen gleichmäßigen Polyglukanregeneratfilmen durch Umsetzung von Polyglukan mit einem Silylierungsmittel, Filmbildung und Entsilylierung aufzuzeigen, bei dem sich auf möglichst einfache Weise reproduzierbar gleichmäßige dünne Filme herstellen lassen und die Silylierungsmittel direkt zurückgewonnen werden können.

Dies läßt sich überraschenderweise dadurch bewerkstelligen, daß aus silylierter Cellulose nach dem Langmuir-Blodgett-Verfahren oder durch Spin-Coating dünne Filme hergestellt und diese durch gasförmige Mineral- oder organische Säuren entsilyliert werden.

Gegenstand der vorliegenden Erfindung ist ein Verfahren zur Herstellung von dünnen Polyglukanregeneratfilmen durch Umsetzung von Polyglukan mit einem Silylierungsmittel, Filmbildung und Entsilylierung, das dadurch gekennzeichnet ist, daß die Filmbildung nach dem Langmuir-Blodgett-Verfahren oder durch Spin-Coating und die Entsilylierung durch gasförmige Mineralsäure oder gasförmige organische Säure erfolgt.

Als Silylierungsmittel eignen sich für das erfindungsgemäße Verfahren insbesondere Verbindungen der allgemeinen Formel (I) oder (II) 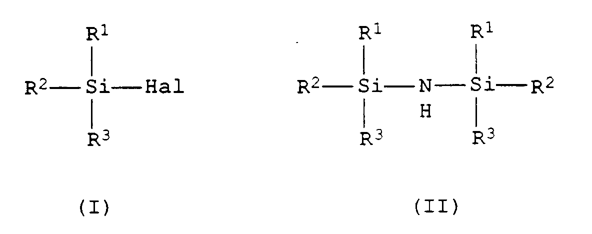
worin Hal für Cl, Br oder I steht, R¹ und R² untereinander gleich oder verschieden sind und für Alkylreste mit 1 bis 4 Kohlenstoffatomen stehen und R³ für einen Alkylrest mit 1 bis 18 Kohlenstoffatomen oder für einen Phenyl-, Tolyl- oder Benzylrest steht, oder ein Hexaalkyldisilazan, wie z.B. Hexamethyldisilazan.

Als gasförmige Mineralsäuren kommen vorzugsweise HCl und HBr, als gasförmige organische Säuren kommen vorzugsweise Monocarbonsäuren mit 1 bis 3 Kohlenstoffatomen für das erfindungsgemäße Verfahren in Betracht.

Die für das erfindungsgemäße Verfahren einzusetzenden Polyglukane, vorzugsweise Cellulosen, weisen im allgemeinen Polymerisationsgrade (= dp) zwischen 30 und 3000 auf, der Substitutionsgrad der silylierten Polyglukane bzw. Cellulosen liegt zwischen 1 und 3.

Die Filmbildung kann auf unterschiedlichen Substraten erfolgen, beispielsweise auf Metall-, Glas-, Silicium- oder Kunststoffoberflächen, wobei die Filme gegebenenfalls auch vor der Entsilylierung von diesen Oberflächen entfernt werden können.

Gegenstand der vorliegenden Erfindung ist auch die Verwendung der erfindungsgemäß hergestellten dünnen Polyglukanregeneratfilme als Membranen für Trennprozesse oder Sensorsysteme.

Die Nachteile der Regenerierung von Cellulosefasern mit wäßrigen Säuren, wie die aufwendige Rückgewinnung der beim Spinnprozeß verwendeten Lösungsmittel aus den Spinnbädern, die geringe Variabilität der äußeren Bedingungen (wie z.B. Temperatur und Spinngeschwindigkeit) beim Spinnprozeß sowie der Ausschluß einer wasserfreien Prozeßführung zur direkten Rückgewinnung der Silylierungsreagentien, werden durch erfindungsgemäße Verfahren, bei dem die Regenerierung mit gasförmige Säure erfolgt, überwunden.

Nach dem erfindungsgemäßen Verfahren lassen sich auf einfache Weise unter direkter Rückgewinnung der eingesetzten Silylierungsmittel der allgemeinen Formel (I) gleichmäßig dünne dichte kompakte Polyglukan- bzw. Celluloseregeneratfilme herstellen, die als solche oder auf Substraten angebracht vielfältig verwendbar sind, beispielsweise für Membrane und Sensormaterialien.

Zum erfindungsgemäßen Verfahren ist im einzelnen folgendes auszuführen.

Als Polyglukane eignen sich für das erfindungsgemäße Verfahren beispielsweise Cellulose, Chitin und Stärke, wobei als Cellulose sowohl Celluloselinters aus Baumwolle als auch Zellstoff, wie er aus Holz gewonnen werden kann in Frage kommen. Die Polyglukane weisen Polymerisationsgrade von 30 bis 3000, vorzugsweise von 100 bis 1500 auf.

Die Herstellung silylierter Cellulose ist bekannt und beispielsweise in J. Polym. Sci. Part A-1, (1969) 7(7) 1947-58 und MaKromol. Chemie (1968) 120, 87-95 beschrieben.

Die Polyglukane bzw. die Cellulose werden mit einem Silylierungsmittel, beispielsweise mit Verbindungen der allgemeinen Formel (I) oder (II) 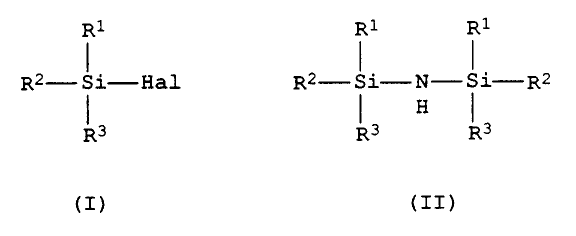
worin Hal für Cl, Br oder I steht, R¹ und R² untereinander gleich oder verschieden sind und für Alkylreste mit 1 bis 4 Kohlenstoffatomen stehen und R³ für einen Alkylrest mit 1 bis 18 Kohlenstoffatomen oder für einen Phenyl-, Tolyl- oder Benzylrest steht, umgesetzt.

Bevorzugt sind Verbindungen der allgemeinen Formel (I), in denen Hal für Cl, R¹ und R² für CH₃ oder C₂H₅ und R³ für CH₃, (CH₃)₂CH-C(CH₃)₂ (= Thexyl) oder C₈H₁₇ stehen, sowie entsprechende Verbindungen der allgemeinen Formel (II), beispielsweise Hexamethyldisilazan.

Diese Silylierung der Cellulose kann in heterogener oder homogener Phase erfolgen, im allgemeinen in Gegenwart von Basen, z.B. primären oder sekundären Aminen, Pyridin oder Ammoniak.

Anstelle von Silylierungsmittel der allgemeinen Formel (I), bei deren Umsetzung mit dem Polyglukan bzw. der Cellulose Halogenwasserstoff (HHal) freigesetzt wird, können auch Silylierungsmittel eingesetzt werden, die ohne Abspaltung von HHal silylieren, z.B. Disilazane, wie z.B. Hexamethyldisilazan.

Der Silylierungsgrad der erfindungsgemäß einzusetzenden Cellulose kann in weiten Grenzen und in Abhängigkeit von der C-Kettenlänge der Reste R¹ bis R³ variieren.

Silyliertes Polyglukan bzw. silylierte Cellulose, deren Substituenten R¹ bis R³ für Methyl stehen, können Substitutionsgrade (= ds) von 1 bis 3 aufweisen, d.h. 1 bis 3 OH-Gruppen sind silyliert, bevorzugt ist in diesem Falle ein Substitutionsgrad zwischen 2,3 und 2,8. Bei längeren C-Ketten in den Substituenten R¹ bis R⁴ kann ein Substitutionsgrad von 1 bis 2,5 genügen, damit die silyierten Polyglukane in unpolaren organischen, mit Wasser nicht mischbaren Lösungsmitteln genügend löslich sind, und so die Weiterverarbeitung nach dem Langmuir-Blodgett- bzw. nach dem Spin-Coating-Verfahren zu ermöglichen.

Geeignete unpolare organische, mit Wasser nicht mischbare Lösungsmittel, in welchen die silylierten Polyglukane löslich sind, sind beispielsweise schnell verdampfende aliphatische oder aromatische Kohlenwasserstoffe, wie Hexan, Benzol, Cyclohexan, Halogenkohlenwasserstoffe, wie Chloroform oder Methylenchlorid oder Ester, wie Ethylacetat.

Die Langmuir-Blodgett-Technik, die dazu geeigneten Apparaturen und die Voraussetzungen für die Durchführbarkeit dieser Methode sind bekannt, beispielsweise beschrieben in G.L. Gaines, "Insoluble Monolayers at Liquid-Gas-Interfaces", Interscience Publishers, 1966.

Eine umfassende Literaturübersicht ergibt sich auch z.B. aus Tagungsbänden zu drei Konferenzen über Langmuir-Blodgett-Filme, die in den folgenden Bänden von Thin Solid Films erschienen sind: 160 (1988), 159 (1988), 132-134 (1985) und 99 (1983).

Die silylierten Polyglukane werden zweckmäßigerweise in leichtflüchtigen organischen Lösungsmitteln, wie Methylenchlorid, Chloroform, Benzol, Hexan oder Ethylacetat in Konzentrationen von beispielsweise 0,01 bis 1 Gew.-% gelöst, die Lösung auf der Wasseroberfläche des Langmuir-Troges gespreitet, das Lösungsmittel aus der auf die Wasseroberfläche aufgebrachten Lösung des silylierten Polyglukans durch Verdunsten entfernt und die Monoschicht vor der Übertragung auf festen Schichtträger in üblicher Weise vorkomprimiert.

Man arbeitet im allgemeinen bei Temperaturen zwischen 5 und 50, vorzugsweise 5 bis 30°C.

Die Übertragung erfolgt in üblicher Weise durch Durchtauchen geeigneter gereinigter Träger durch die mit dem silylierten Polyglukan-Film bedeckte Wasseroberfläche bzw. zur Herstellung entsprechender Multischichten durch sukzessive Übertragung weiterer Monoschichten.

Als Schichtträger für die silylierten Polyglukanfilme kommen beliebige feste, vorzugsweise dimensionsstabile, Substrate aus den unterschiedlichsten Materialien in Betracht. Die als Schichtträger dienenden Substrate können z.B. transparent oder lichtundurchlässig, elektrisch leitend oder isolierend sein. Die Oberfläche des Substrats, auf die die dünne Schicht der silylierten Polyglukane aufgebracht wird, kann hydrophobisiert sein. Das Substrat kann aus einem hydrophoben Material bestehen oder die Oberfläche des Substrats kann vor dem Aufbringen der dünnen Schicht des silylierten Polyglukans in an sich bekannter Weise durch eine geeignete Vorbehandlung hydrophobisiert werden. Die zu beschichtende hydrophobe Oberfläche der Substrate sollte möglichst rein sein, damit die Ausbildung einer dünnen, geordneten Schicht, insbesondere monomolekularer bzw. multimolekularer Schichtstruktur, nicht gestört wird. Beispielsweise kann bei Anwesenheit von oberflächenaktiven Stoffen auf der zu beschichtenden Oberfläche der Substrate die Ausbildung eines guten Monomolekular- bzw. Multimolekular-Films beeinträchtigt werden. Es ist jedoch möglich, daß die als Schichtträger dienenden Substrate auf ihrer zu beschichtenden Oberfläche vor dem Aufbringen der dünnen Schichten des silylierten Polyglukans zunächst mit einer Zwischenschicht versehen werden, beispielsweise zur Erzielung einer hohen Haftung zwischen der festen, dünnen Schicht des silylierten Polyglukans und dem Substrat.

Als Materialien für die als Schichtträger dienenden Substrate können beispielsweise Metalle, wie etwa Gold, Platin, Nickel, Palladium, Aluminium, Chrom, Niob, Tantal, Titan, Stahl und dergleichen verwendet werden. Andere geeignete Materialien für die Substrate sind u.a. Kunststoffe, wie z.B. Polyester, etwa Polyethylenterephthalat oder Polybutylenterephthalat, Polyvinylchlorid, Polyvinylidenchlorid oder Polytetrafluorethylen.

Gleichermaßen kommen beispielsweise Silicium, Glas, Siliciumdioxid oder keramische Werkstoffe als Materialien für die Substrate in Betracht. Die Oberfläche von Glassubstraten kann - sofern erforderlich - in an sich bekannter Weise, beispielsweise durch Umsetzung mit Alkylsilanen, hydrophobiert werden. Die Auswahl der Substratmaterialien richtet sich u.a. vornehmlich nach dem Verwendungszweck der erfindungsgemäß hergestellten Schichtelemente. Für optische Elemente werden in aller Regel transparente, lichtdurchlässige Substrate als Schichtträger eingesetzt. Werden die erfindungsgemäß hergestellten Schichtelemente beispielsweise in der Elektrotechnik oder bei elektrochemischen Prozessen verwendet, dienen als Substrate insbesondere elektrisch leitfähige Materialien, wie Metalle, oder Materialien mit elektrisch leitfähigen, insbesondere metallischen, Oberflächenschichten, wie beispielsweise metallisierte Kunststoffolien.

Die als Schichtträger dienenden Substrate können in Abhängigkeit vom Verwendungszweck beliebige Formen aufweisen. Beispielsweise können sie film-, folien-, platten-, bandförmig oder auch zylinderförmig sein oder unter beliebigen anderen Formen ausgewählt werden. Im allgemeinen wird es sich bei den Schichtträgern um flache, ebene Substrate handeln, wie z.B. Filme, Folien, Platten, Bänder, Bleche und dergleichen. Die zu beschichtende Oberfläche der Substrate ist vorzugsweise glatt, wie es für die Herstellung von dünnen geordneten Schichten mit wohldefinierter Struktur, insbesondere Monomolekularfilmen oder Multimolekularfilmen, üblich ist. Bei den flachen ebenen Substraten, wie Filmen, Folien, Bändern etc., können die erfindungsgemäßen dünnen, geordneten Schichten wohldefinierter Struktur der organischen Polymeren nur auf eine oder auf beide Oberflächen des Substrats aufgebracht werden. Nach dem Langmuir-Blodgett-Verfahren können so beispielsweise bis zu einigen 1000 Moleküllagen auf hydrophobe Substrate übertragen werden.

Es kann vorteilhaft sein, unmittelbar nach der Übertragung der Monomolekularfilme von der Wasseroberfläche auf das Substrat das erfindungsgemäß hergestellte Schichtelement bei erhöhten Temperaturen, im allgemeinen im Bereich von 50 bis 300°C, vorzugsweise im Bereich von etwa 100 bis 200°C, zu tempern. Durch den an die Herstellung der erfindungsgemäßen Schichtelemente anschließenden Temperschritt können die Eigenschaften der erfindungsgemäßen Schichtelemente stabilisiert bzw. auch gezielt variiert werden.

Die Bildung von dünnen Filmen der silylierten Polyglukane bzw. Cellulose kann auch nach dem Spin-Coating-Verfahren erfolgen. Das Spin-Coating-Verfahren ist an und für sich bekannt und beispielsweise beschrieben in A. Weill: "The Spin-Coating-Process Mechanism" in M.J. Kelly: "The Physics and Fabrication of Microstructures and Microdevices", Springer Proceedings in Physics, Vol. 13, Springer 1986.

Bezüglich der zu verwendenden Lösungsmittel und zu beschichtenden Substrate gelten auch hier im wesentlichen die für das Langmuir-Blodgett-Verfahren gemachten Angaben. Zur Herstellung von Spin-Coating-Filmen können bis 0,5 bis 25 %ige Lösungen der silylierten Polyglukane eingesetzt werden. Je nach Konzentration der Lösung und Umdrehungszahl, die im allgemeinen zwischen 500 und 4000 Upm, vorzugsweise zwischen 1000 und 2500 Upm lassen sich Schichtdicken zwischen 0,1 und 10 µm herstellen.

Die nach dem Langmuir-Blodgett bzw. nach dem Spin-Coating-Verfahren hergestellten gleichmäßigen dünnen Filme der silylierten Polyglukane, die Schichtdicken zwischen 0,1 und 10, vorzugsweise zwischen 0,3 und 4 µm aufweisen, können zu ihrer Entsilylierung entweder auf dem Substrat verbleiben, auf dem sie aufgebracht worden sind, oder von diesem Substrat entfernt werden.

Die Entsilylierung erfolgt erfindungsgemäß durch gasförmige Mineralsäure, wie z.B. Halogenwasserstoffsäure, z.B. 10 bis 20 %ige oder conc. Salzsäure, oder gasförmigen Bromwasserstoff, oder gasförmige organische Säuren, wie z.B. leichtflüchtige Carbonsäuren, wie z.B. Ameisensäure, Essigsäure oder Propionsäure.

Zur Entsilylierung genügt es, die Filme der silylierten Polyglukane für kurze Zeit, beispielsweise 10 Sekunden bis 5 Minuten in eine die gasförmige Mineralsäure oder organische Säure enthaltende Atmosphäre zu bringen. Die Temperatur kann dabei in relativ weiten Grenzen, beispielsweise zwischen 0 und 100, insbesondere zwischen 5 und 50°C schwanken.

Bei Verwendung von Silylierungsmittel der allgemeinen Formel (I) und Halogenwasserstoffen als Entsilylierungsmittel kann das Silylierungsmittel wieder zurückgewonnen werden.

Der Nachweis der Entsilylierung der Polyglukanregeneratfilme kann IR-spektroskopisch, z.B. mittels FTIR (= Fourier-Transform-IR-Spektrum) erfolgen. Der Nachweis der Schichtqualität der Regeneratfilme kann mittels Röntgenbeugung erfolgen.

Nach dem erfindungsgemäßen Verfahren erhält man erstmals hydrophile ultradünne Schichten, die gegen wäßrige, polare und unpolare Lösungsmittel beständig sind und beispielsweise zur Herstellung von Membranen und biokompatiblen Überzügen, beispielsweise für Biosensoren verwendbar sind. Weitere Beispiele für Anwendungsmöglichkeiten erfindungsgemäß hergestellter Celluloseregeneratfilme sind Trennmembranen, ionenselektive Sensoren sowie die Metallisierung von Polymeroberflächen.

Die Erfindung wird durch die nachfolgenden Beispiele näher erläutert. Die in den Beispielen genannten Teile und Prozente beziehen sich, sofern nicht anders angegeben, auf das Gewicht.

### Beispiele 1 und 2

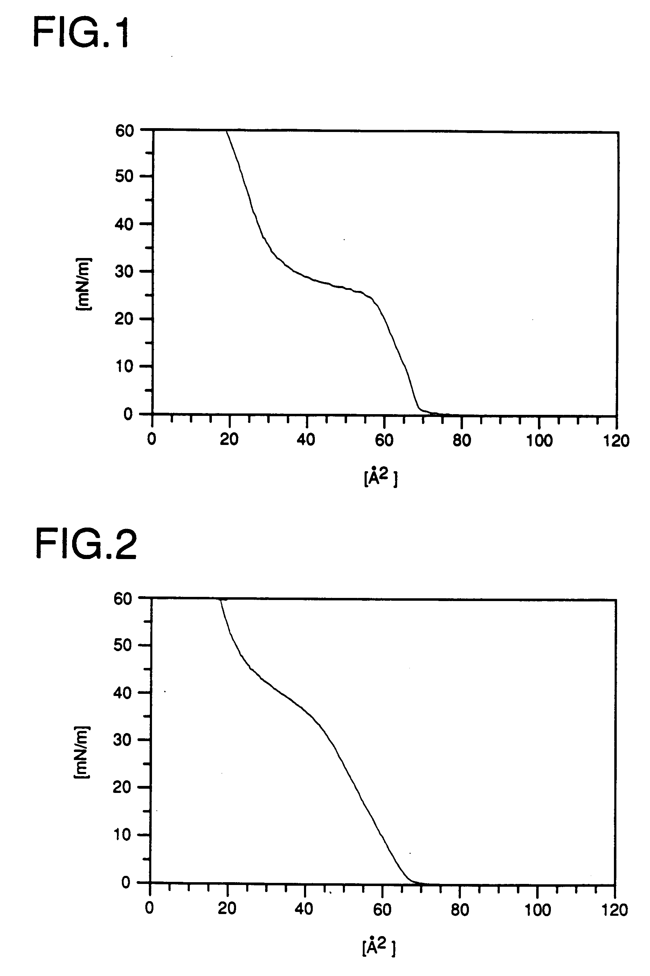

Es werden jeweils Lösungen von 3 mg Trialkylsilylcellulose in 10 ml Chloroform oder n-Hexan hergestellt und bei 20°C Subphasentemperatur auf die Wasser/Luft-Grenzfläche einer Filmwaage gespreitet. Fig. 1 zeigt die Druck-Flächen Isothermen von Trimethylsilylcellulose, Fig. 2 die von Thexyldimethylsilylcellulose. Man erkennt, daß der Kollaps der Monoschicht in beiden Fällen erst oberhalb von 25 mN/m erfolgt.

Zur Herstellung von Langmuir-Blodgett (= LB) Multischichten wurden folgende Übertragungsparameter gewählt:
Subphasentemperatur: 20°C
Oberflächenspannung: 20 mN/m
Tauchgeschwindigkeit: 1-20 cm/min
Als Substrate wurden gewöhnliche Glas-Objektträger (hydrophobisiert mit HMDS (= Hexamethyldisilazan)) oder Si-Waver (hydrophobisiert mit HMDS oder NH₄F) benutzt. Das Übertragungsverhältnis liegt beim Ein- und Austauchen der Substrate bei 100 ± 5 %.

Zur Regenerierung der Cellulose wurden die LB-Schichten für 10-60 sec in die Gasatmosphäre einer 18 %igen Salzsäure gehalten. Die quantitative Abspaltung der Trialkylsilyl-Seitengruppen konnte mittels IR-Spektroskopie verfolgt werden.

### Beispiel 3

Zur Herstellung eines Spin-Coat-Films wurde eine Lösung aus 200 mg Trimethylsilylcellulose in 7 ml Chloroform auf eine hydrophile Si-Scheibe getropft; bei einer Umdrehungszahl von 2000 Upm ergab sich eine Schichtdicke von 3000 Å.

Der Spin-Coat-Film wurde für 30 Sekunden in die Gasatmosphäre einer conc. HCl gehalten. Die quantitative Abspaltung der Trimethylsilylgruppen wurde mittels IR-Spektroskopie nachgewiesen.

### Beispiel 4

### FTIR-Spektren zur Kontrolle der Cellulose-Regenerierung:

Mittels FTIR-Spektroskopie ließ sich die Abspaltung der Seitengruppen der Trialkylsilylcellulose und somit die Regenerierung von Cellulose in LB- und Spin-Coat-Filmen verfolgen.

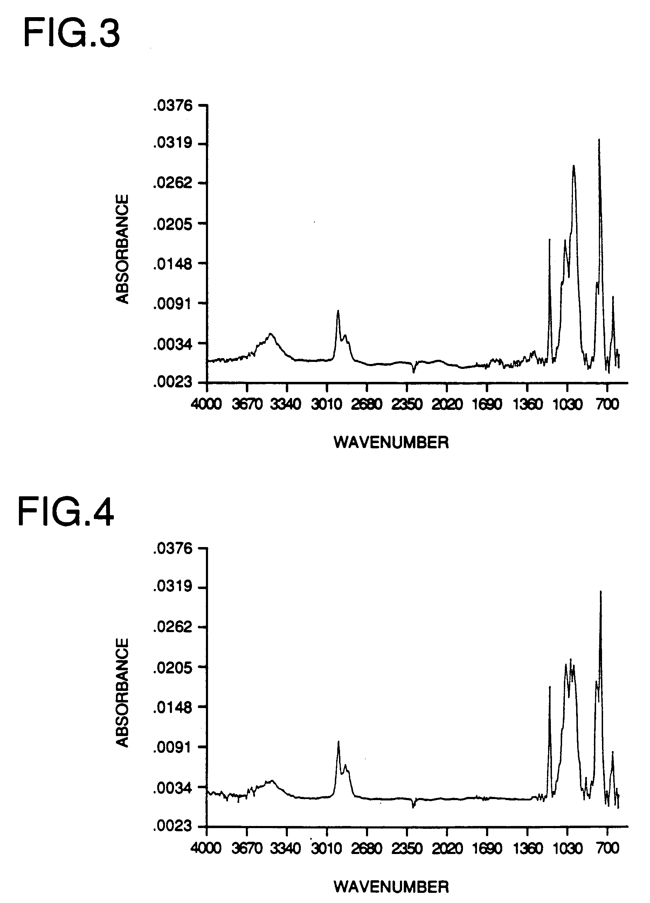

Fig. 3 zeigt FTIR-Spektren eines LB-Films aus 80 Moleküllagen Trimethylsilylcellulose (Gesamtschichtdicke ca. 712 Å) mit parallel, Fig. 4 mit senkrecht zur Tauchrichtung des Substrats polarisierter Strahlung. Aus dem Dichroismus der Banden zwischen 1000 cm⁻¹ und 1200 cm⁻¹ läßt sich eine Vorzugsorientierung der Polymerketten parallel zur Tauchrichtung ablesen.

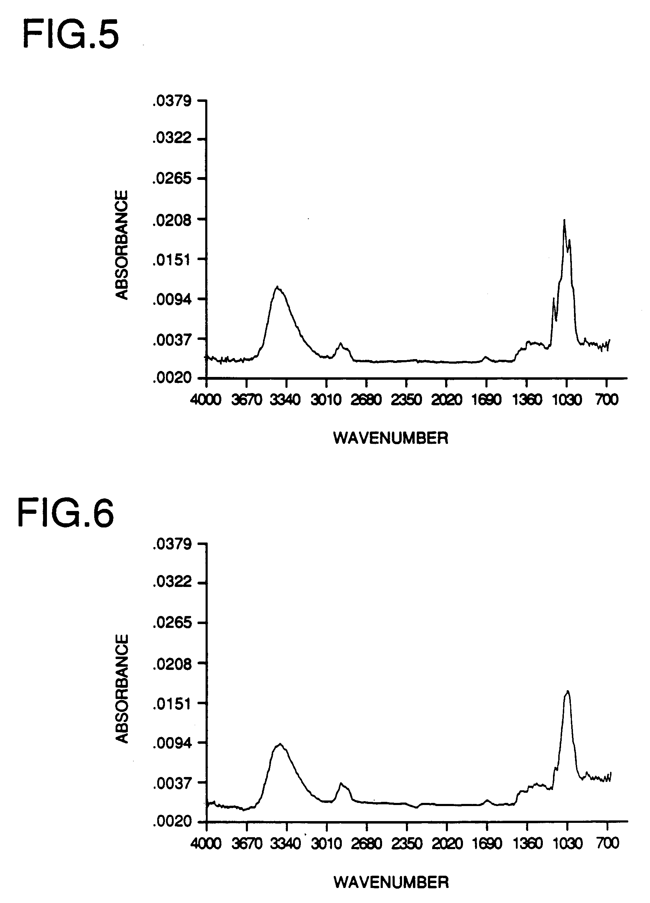

Nach Behandlung der Probe mit gasförmiger HCl wurden die in Fig. 5 bzw. Fig. 6 dargestellten FTIR-Spektren gemessen. Man erkennt, daß die Banden der Silylseitengruppen (Si-C-Schwingung bei 1250 cm⁻¹ und 898 cm⁻¹) verschwunden sind. Die Intensität der C-H-Schwingungsbanden zwischen 2900 und 3000 cm⁻¹ nimmt ab, während die Intensität der OH-Bande stark ansteigt. Nach der Desilylierung erhält man somit ein typisches FTIR-Spektrum der Cellulose, wobei die Vorzugsorientierung der Polymerketten parallel zur Tauchrichtung erhalten bleibt.

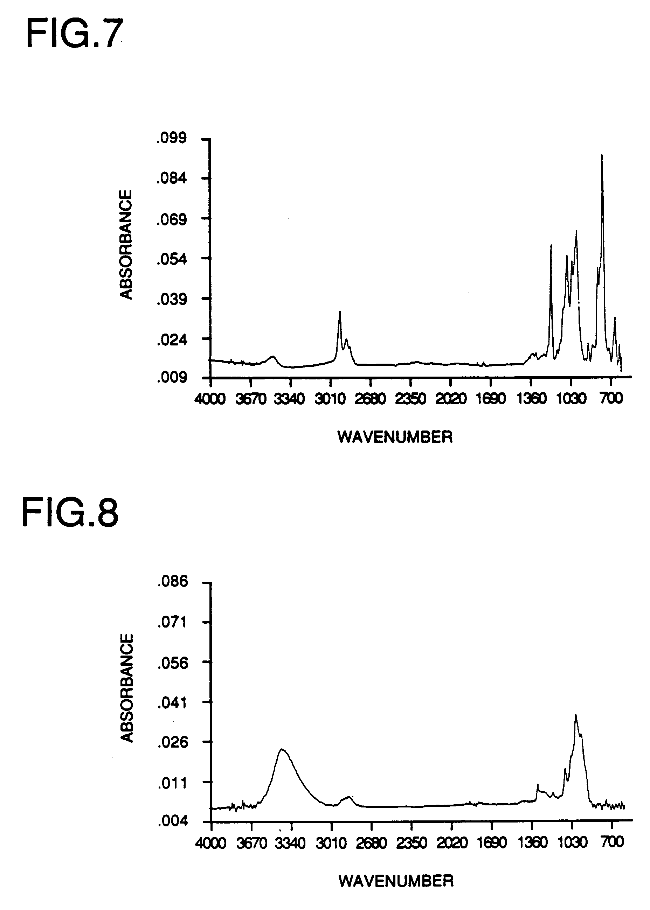

Analog wurde die Regenerierung der Cellulose an einem Spin-Coat-Film der Dicke 3000 Å verfolgt. Fig. 7 zeigt FTIR-Spektren (unpolarisiert) vor, Fig. 8 nach Desilylierung. Hier zeigen sich nach der Regenerierung der Cellulose die gleichen charakteristischen Änderungen im FTIR-Spektrum wie bei den entsprechenden LB-Filmen. Diese Messung zeigt, daß auch relativ dicke Filme durch Behandlung mit gasförmiger HCl innerhalb kurzer Zeit quantitativ desilyliert werden können.

### Beispiel 5

### Röntgenreflexionsmessungen zur Bestimmung der Schichtparameter:

Durch Reflexion von Röntgenstrahlung an LB-Filmen lassen sich Informationen über Schichtdicke, Periodizität und Oberflächenqualität erhalten (Lit. F. Rieutord, J.J. Benattar, L. Bosio, P. Robin, C. Blot, R. de Kouchkovsky, J. Physique 48, (1987) 679).

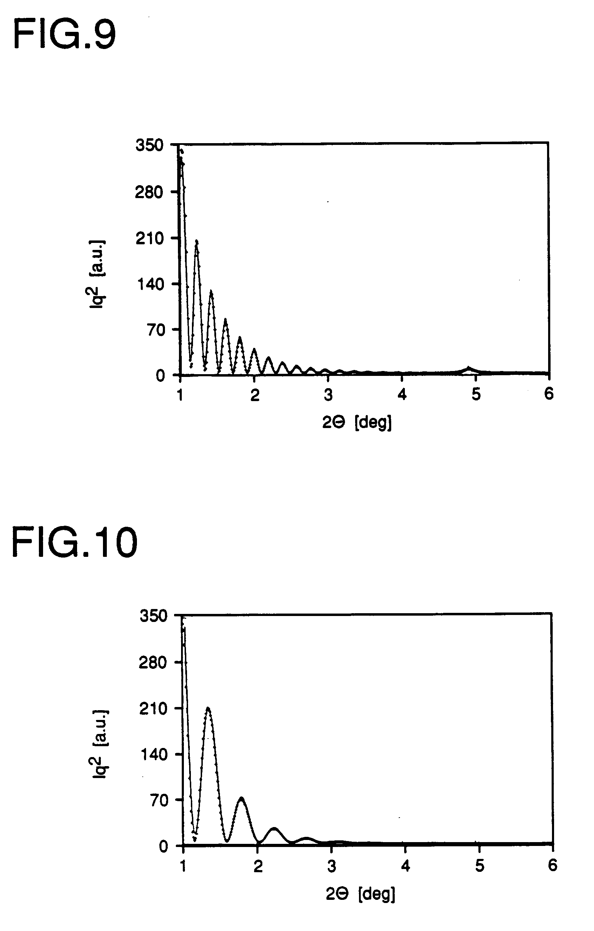

In Fig. 9 ist die Röntgenreflexionskurve eines LB-Films aus 50 Lagen Trimethylsilylcellulose dargestellt. Die Auswertung der Kurve ergab folgende Film-Parameter:
Periodizität: 17,8 Å
Oberflächenrauhigkeit: 7 Å
Gesamtschichtdicke: 445 Å
Die Reflexionskurve spricht für eine homogene Filmstruktur mit glatter Oberfläche und periodischer Anordnung der Trimethylsilylcelluloseschichten (bzw. -doppelschichten). Nach der Cellulose-Regenerierung mittels gasförmiger HCl wurde die Reflexionskurve Fig. 10 gemessen, aus der sich folgende Parameter ergaben:
Oberflächenrauhigkeit: 9 Å
Gesamtschichtdicke: 198 Å
Die Dicke des Films hat durch die Desilylierung um mehr als 50 % abgenommen, wobei die Oberflächenrauhigkeit geringfügig angestiegen ist. Eine periodische Schichtstruktur wird nicht mehr beobachtet. Die Reflexionskurve spricht allerdings nach wie vor für eine homogene Bedeckung des Substrats. Offensichtlich werden durch die Regenerierung der Cellulose keine größeren Inhomogenitäten oder Defekte in den LB-Filmen erzeugt.
Fig. 1: Druck-Flächen-Isotherme von Trimethylsilylcellulose (ds = 2,8; dp = 150) bei einer Subphasentemperatur von 20°C
Fig. 2: Druck-Flächen-Isotherme von Thexyldimethylsilylcellulose (ds = 1,6; dp = 200) bei einer Subphasentemperatur von 20°C
Fig. 3: FTIR-Spektrum eines LB-Films aus 80 Moleküllagen Trimethylsilylcellulose (ds = 2,8; dp = 150) auf Silizium. Der LB-Film wurde gemäß Beispiel 3 hergestellt. Der E-Feld-Vektor (= Vektor des elektrischen Feldes) der IR-Strahlung ist parallel zur Tauchrichtung des Substrats orientiert.
Fig. 4: FTIR-Spektrum eines LB-Films aus 80 Moleküllagen Trimethylsilylcellulose (ds = 2,8; dp = 150) auf Silizium. Der LB-Film wurde gemäß Beispiel 3 hergestellt. Der E-Feld-Vektor der IR-Strahlung ist senkrecht zur Tauchrichtung des Substrats orientiert.
Fig. 5: FTIR-Spektrum eines ultradünnen Films aus regenerierter Cellulose (hergestellt gemäß Beispiel 2) mit Polarisation des E-Feld-Vektors parallel zur Tauchrichtung des Substrats.
Fig. 6: FTIR-Spektrum eines ultradünnen Films aus regenerierter Cellulose (hergestellt gemäß Beispiel 2) mit Polarisation des E-Feld-Vektors parallel zur Tauchrichtung des Substrats.
Fig. 7: FTIR-Spektrum eines Spin-Coat-Films aus Trimethylsilylcellulose (ds = 2,8; dp = 150), hergestellt gemäß Beispiel 3.
Fig. 8: FTIR-Spektrum eines Cellulose-Regeneratfilms, hergestellt gemäß Beispiel 3.
Fig. 9: Röntgenreflexionskurve eines LB-Films aus 50 Moleküllagen Trimethylsilylcellulose (ds = 2,8; dp = 150), hergestellt gemäß Beispiel 2.
Fig. 10: Röntgenreflexionskurve eines ultradünnen Cellulose-Regeneratfilms, hergestellt gemäß Beispiel 2.

## Patentansprüche

1. Verfahren zur Herstellung von dünnen Polyglukanregeneratfilmen durch Umsetzung von Polyglukan mit einem Silylierungsmittel, Filmbildung und Entsilylierung, dadurch gekennzeichnet, daß die Filmbildung nach dem Langmuir-Blodgett-Verfahren oder durch Spin-Coating und die Entsilylierung durch gasförmige Mineralsäure oder gasförmige organische Säure erfolgt.

2. Verfahren nach Anspruch 1, dadurch gekennzeichnet, daß als Silylierungsmittel eine Verbindung der allgemeinen Formel (I) oder (II) 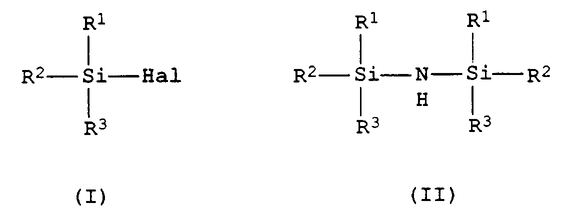 eingesetzt wird, worin Hal für Cl, Br oder I steht, R¹ und R² untereinander gleich oder verschieden sind und für Alkylreste mit 1 bis 4 Kohlenstoffatomen stehen und R³ für einen Alkylrest mit 1 bis 18 Kohlenstoffatomen oder für einen Phenyl-, Tolyl- oder Benzylrest steht.

3. Verfahren nach einem der vorhergehenden Ansprüche, dadurch gekennzeichnet, daß als gasförmige Mineralsäure HCl oder HBr eingesetzt wird.

4. Verfahren nach einem der Ansprüche 1 oder 2, dadurch gekennzeichnet, daß als gasförmige organische Säure eine Monocarbonsäure mit 1 bis 3 Kohlenstoffatomen eingesetzt wird.

5. Verfahren nach einem der vorhergehenden Ansprüche, dadurch gekennzeichnet, daß als Polyglukan Cellulose mit einem Polymerisationsgrad zwischen 30 und 3000 eingesetzt wird.

6. Verfahren nach einem der vorhergehenden Ansprüche, dadurch gekennzeichnet, daß der Substitutionsgrad des silylierten Polyglukans zwischen 1 und 3 liegt.

7. Verfahren nach einem der vorhergehenden Ansprüche, dadurch gekennzeichnet, daß die Filmbildung auf einer Metall-, Glas-, Silicium- oder Kunststoffoberfläche erfolgt und der Film gegebenenfalls vor der Entsilylierung von dieser Oberfläche entfernt wird.

8. Verwendung eines nach einem Verfahren gemäß einem der vorhergehenden Ansprüche hergestellten dünnen Polyglukanregeneratfilmes als Membran für Trennprozesse oder Sensorsysteme.
